# EUROPEAN PATENT SPECIFICATION

(11) **EP 2 961 805 B1**
(45) Date of publication and mention of the grant of the patent: **21.12.2016**
(21) Application number: 14706536.1
(22) Date of filing: 21.02.2014
(51) Int. Cl.: C09D 183/04, C09D 5/16, C09D 171/00

(54) **ANTI-FOULING COMPOSITIONS WITH A FLUORINATED OXYALKYLENE-CONTAINING POLYMER OR OLIGOMER**
BEWUCHSSCHUTZZUSAMMENSETZUNGEN MIT EINEM FLUORINIERTEN OXYALKYLENHALTIGEN POLYMER ODER OLIGOMER
COMPOSITIONS ANTISALISSURES AVEC UN POLYMÈRE CONTENANT DE L'OXYALKYLÈNE FLUORÉ OU UN OLIGOMÈRE

(30) Priority: 26.02.2013 EP 13156771; 04.03.2013 US 201361772084 P
(43) Date of publication of application: 06.01.2016
(73) Proprietor: Akzo Nobel Coatings International B.V., 6824 BM Arnhem (NL)
(72) Inventor: REYNOLDS, Kevin, John, Gateshead Tyne and Wear NE9 6TN (GB); TYSON, Brent Vickers, Newcastle-upon-Tyne Tyne and Wear NE3 4I (GB)
(74) Representative: Akzo Nobel IP Department
(86) International application number: PCT/EP2014/053379
(87) International publication number: WO 2014/131695

(56) References cited:
- EP-A1- 2 253 682
- WO-A1-02/074870

## Description

The invention pertains to an anti-fouling composition which comprises a curable polymer and a fluorinated oxyalkylene-containing polymer or oligomer, a method for inhibiting fouling in an aquatic environment and to a substrate coated with the anti-fouling composition.
Man-made structures such as boat and ship hulls, buoys, drilling platforms, dry dock equipment, oil and gas production rigs, floating oil and gas processing, storage and offloading vessels, aquaculture equipment and netting, energy generation devices, power station inlets and cables and pipes which are immersed in water and tanks, pipes and conduits used to store and transport water are prone to fouling by aquatic organisms such as diatoms, slime biofilms, green and brown algae, barnacles, mussels, and the like. Such structures are commonly of metal, but may also comprise other structural materials such as wood, glass-reinforced plastic or concrete. This fouling in the marine environment is a nuisance on boat hulls because it increases frictional resistance during movement through the water, the consequence being reduced speeds and increased fuel costs. It is a nuisance on static structures such as the legs of drilling platforms and oil and gas production, storage, processing and offloading rigs, firstly because the resistance of thick layers of fouling to waves and currents can cause unpredictable and potentially dangerous stresses in the structure, and secondly, because fouling makes it difficult to inspect the structure for defects such as stress cracking and corrosion. It is a nuisance in pipes such as cooling water intakes and outlets because the effective cross-sectional area is reduced by fouling, with the consequence that flow rates are reduced.
The commercially most successful methods of inhibiting fouling have involved the use of anti-fouling coatings containing substances toxic to aquatic life, for example tributyltin chloride or cuprous oxide. Such coatings, however, are being regarded with increasing disfavour because of the damaging effects such toxins may have if released into the aquatic environment in excessive amounts. There is accordingly a need for anti-fouling coatings which do not release markedly toxic materials in excessive amounts.

It has been known for many years, for example as disclosed in GB 1,307,001 and US 3,702,778 that silicone rubber coatings resist fouling by aquatic organisms. It is believed that such coatings present a surface to which the organisms cannot easily adhere, and they can accordingly be called fouling-release rather than anti-fouling coatings. Silicone rubbers and silicone compounds generally have very low toxicity. The disadvantage of this anti-fouling system when applied to boat hulls is that although the accumulation of marine organisms is reduced, relatively high vessel speeds are needed to remove all fouling species. Thus, in some instances, it has been shown that for effective release from a hull that has been treated with such a polymer, it is necessary to sail with a speed of at least 14 knots. For this reason silicone rubbers have gained limited commercial success and there is a need for improvement of the anti-fouling and fouling-release properties of these environmentally benign coatings.

FR 2 537 985 discloses an anti-fouling coating composition comprising a methyl organosiloxane resin, a silicone elastomer, polytetrafluoroethylene, an acrylic binder, and a solvent or diluent. Since polytetrafluoroethylene does not contain oxyalkylene functionality, this document does not describe a coating composition comprising a fluorinated oxyalkylene-containing polymer or oligomer.

EP 0 903 389 discloses an anti-fouling composition comprising a photocatalytic oxide, a silicone resin or silica, and a water-repellent fluororesin. Tetrafluoroethylene is mentioned as a preferred hydrophobic fluororesin, and in the examples polytetrafluoroethylene particles have been used. This document does not describe a coating composition comprising a fluorinated oxyalkylene-containing polymer or oligomer.

WO 02/074870 discloses an anti-fouling composition comprising a curable or cross-linkable polymer and a fluid fluorinated alkyl- or alkoxy-containing polymer or oligomer. There is no disclosure therein of a coating composition comprising fluorinated oxyalkylene-containing polymers or oligomers comprising an average of from 4.0 to 100.0 oxyalkylene moieties per polymer or oligomer.

The present invention provides an anti-fouling composition which comprises a curable polymer and a fluorinated oxyalkylene-containing polymer or oligomer wherein the fluorinated oxyalkylene-containing polymer or oligomer comprises:
(a) one or more fluorinated moiety of the formula: 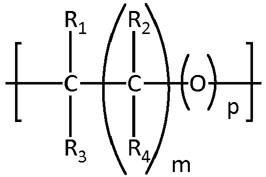 wherein
   if there is more than one fluorinated moiety, the fluorinated moiety may be the same or different,
   p can be independently 0 or 1,
   m can be independently an integer from 0 to 6, and
   R₁, R₂, R₃, and R₄ can be independently H; F; Cl; Br; a linear, branched or cyclic alkyl group having 1 to 16 carbon atoms optionally substituted with F; or a linear, branched or cyclic alkyloxyalkane group having 1 to 16 carbon atoms optionally substituted with F;
   and:
(b) an average of from 4 to 100 oxyalkylene moieties of the formula: 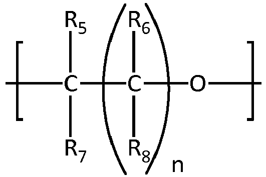 wherein
   if there is more than one oxyalkylene moiety, the oxyalkylene moiety may be the same or different,
   n can be independently an integer from 0 to 4, and
   R₅, R₆, R₇, and R₈ can be independently H or a linear, branched or cyclic C₁-C₁₆ alkyl group.

It was found that the anti-fouling composition of the present invention has superior fouling-resistance and fouling-release properties than other known and disclosed non-biocidal anti-fouling compositions.

### Curable Polymer:

The anti-fouling composition of the invention comprises a curable polymer. In one embodiment the curable polymer is free of polyperfluoropolyether moieties.

By curable, we mean a polymer that is capable of toughening or hardening to form a coating as a result of a chemical reaction between functional groups located on the polymer and/or located on a cross-linker (cross-linking), by solvent evaporation or by other physical means. The curable polymer may be a thermoplastic or a thermoset polymer.

In one embodiment, the curable polymer forms an "elastomer coating" when cured.

By an "elastomer coating", we mean rubber-like coatings exhibiting little plastic flow and quick and nearly complete recovery from an extending force. When tested at room temperature (25°C) using a Zwick tensile test machine and laser extensometer in compliance with ASTM D638-10, the elastomer coatings are capable of being stretched 25% (strain rate 30 mm/minute) and after being stretched 25%, held for 5 minutes and then released, is capable of retracting to within 10% of its original length within 5 minutes after release. Free films for testing in this method should have sample dimensions 90 x 15 x 0.5 mm, prepared by the procedure given in section 8.2.2 of ASTM D2370-98.

In one embodiment the curable polymer is an organosiloxane-containing polymer. The organosiloxane-containing polymer may comprise a repeating unit of the general structure: 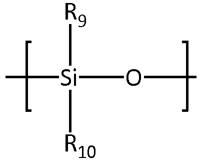 wherein R₉ and R₁₀ are independently selected from hydrogen, alkyl, aryl, aralkyl, alkenyl and vinyl groups. It is preferred that R₉ and R₁₀ are independently selected from an alkyl selected from C₁-C₁₆-alkyl, a phenyl, a C₁-C₁₆-alkylphenyl or a C₁-C₁₆ alkylene. More preferably R₉ and R₁₀ are independently selected from methyl and phenyl. Another preferred organosiloxane-containing polymer is a polymer wherein R₉ and R₁₀ are methyl.

The organosiloxane-containing polymer may have one or more, more preferably two or more reactive functional groups such as silanol, hydroxyl, alkoxy, acetoxy, carboxyl, hydroxysilyl, alkoxysilyl, amine, epoxy, vinyl, acrylic, methacrylic, isocyanate, thiol, carboxylic acid, carboxylic acid ester, urethane, ester or oxime functional groups.

In one embodiment the curable polymer may be a condensation curable polydimethylsiloxane (di-hydroxy-functional) which cures by cross-linking with with tetraethyl orthosilicate and a condensation cure catalyst such as dibutyltin dilaurate or dioctyltin dilaurate. The polydimethylsiloaxne can have a viscosity between 10 and 1,000,000 mPa.s at 25°C, measured following ASTM D4287 using a cone and plate viscometer.

The curable polymer may contain siloxane groups which are substantially free of carbon in the backbone, e.g. polydimethylsiloxane (wherein substantially free of carbon means that less than 1 wt% of carbon is present). Other suitable polymers are those as disclosed in WO 99/33927, particularly the polymers disclosed on page 12, lines 23-31, viz. an organohydrogen polysiloxane or a polydiorganosiloxane. The polysiloxane may, for example, comprise a copolymer of diorganosiloxane units with organohydrogen siloxane units and/or with other diorganosiloxane units, or a homopolymer of organohydrogen siloxane units or of diorganosiloxane units.

Polysiloxanes that can be cross-linked by a hydrosilylation reaction can also be used. Such polymers are known as "hydride silicones" and are disclosed, for instance, in EP 874032-A2 on page 3, viz. a polydiorganosiloxane of the formula R'-(SiOR'₂)ₘ-SiR'₃, wherein each R' independently is a hydrocarbon or fluorinated hydrocarbon radical, at least two R' radicals per molecule being unsaturated, or hydrogen, at least two R' radicals per molecule being hydrogen, and m has an average value in the range of about 10-1,500. Cyclic polydiorganosiloxanes analogous to those of the formula above may also be employed. The hydride silicone preferably is a hydrogen polydimethylsiloxane.

The preferred number average molecular weight range for the hydride silicone is in the range of about 1,000-28,000, corresponding to a value of m in the range of about 13-380.

In another embodiment, the curable polymer may comprise two or more organosiloxanes of different chemical structures and viscosities.

Alternatively, curable polymer may be the polymer as described in WO 2008/132196, wherein the polymer is a polyorganosiloxane polyoxyalkylene block copolymer of the form PS-(A-PO-A-PS)ₙ, wherein PS represents a polyorganosiloxane block, PO represents a polyoxyalkylene block, A represents a divalent moiety, and n has a value of at least 1, for example 10-250. The polymer described in WO 2008/132196 has two or three reactive groups X on a polyorganosiloxane block per molecule which may self-condense and crosslink in the presence or absence of a catalyst which can, optionally, be crosslinked with another organosilicon crosslinking agent containing two or more groups Y which are reactive with the said groups X. Other suitable polymers are those discussed in WO 2013/000478 and WO 2013/000479.

In another embodiment the curable polymer may be one or more siloxane-acrylic hybrid polymers. The siloxane-acrylic hybrid polymers are free of perfluoropolyether moieties. Preferably, they contain less than 10 wt.% of fluorine, more preferably less than 1 wt.%. Most preferred are curable or polymers that do not contain detectable amounts of fluorine at all.

### Fluorinated oxyalkylene-containing Polymer or Oligomer:

The anti-fouling composition of the invention comprises a fluorinated oxyalkylene-containing polymer or oligomer which comprises:
(a) one or more fluorinated moiety of the formula: 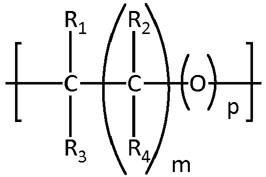 wherein
   if there is more than one fluorinated moiety, the fluorinated moiety may be the same or different,
   p can be independently 0 or 1,
   m can be independently an integer from 0 to 6, and
   R₁, R₂, R₃, and R₄ can be independently H; F; Cl; Br; a linear, branched or cyclic alkyl group having 1 to 16 carbon atoms optionally substituted with F; or a linear, branched or cyclic alkyloxyalkane group having 1 to 16 carbon atoms optionally substituted with F;
   and:
(b) an average of from 4.0 to 100.0 oxyalkylene moieties of the formula: 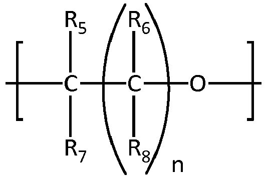 wherein
   if there is more than one oxyalkylene moiety, the oxyalkylene moiety may be the same or different,
   n can be independently an integer from 0 to 4, and
   R₅, R₆, R₇, and R₈ can be independently H or a linear, branched or cyclic C₁-C₁₆ alkyl group.

For the avoidance of all doubt, by definition a "fluorinated moiety", must contain at least one fluorine atom. i,e, at least one of R₁, R₂, R₃ and R₄ in the fluorinated moiety must comprise a fluorine (F) atom.

For the avoidance of doubt, the terms "fluorinated moiety", "fluorinated moieties" "oxyalkylene moiety" and "oxyalkylene moieties" are to be understood as having the structures as defined above and as further defined herein.

Quantitative determination of the number of fluorinated moieties and oxyalkylene moieties per polymer/oligomer may be determined by conventional NMR analysis (¹⁹F-NMR, ¹H-NMR and ¹³C-NMR), for example as outlined in Macromolecules 1995, Vol 28, No 21, pages 7271-7275*.*

Preferably, there is an average of from 4.0 to 20.0 oxyalkylene moieties in the fluorinated oxyalkylene-containing polymer or oligomer.

Preferably, the oxyalkylene moieties are oxyethylene moieties.

R₁, R₂, R₃, and R₄ can be independently H; F; Cl; Br; a linear, branched or cyclic alkyl group having 1 to 16 carbon atoms optionally substituted with F; or a linear, branched or cyclic alkyloxyalkane group having 1 to 16 carbon atoms optionally substituted with F.
Exemplary examples of linear alkyl groups having 1 to 16 carbon atoms substituted with F include CF₃, -CF₂CF₃, -CF₂CF₂CF₃, and, -CF₂CF₂CF₂CF₃.

Exemplary examples of linear alkyloxyalkane groups having 1 to 16 carbon atoms optionally substituted with F include -CH₂OCH₂CF₃ or -CH₂OCH₂CF₂CF₃. For example, R₁, R₂, R₃, and R₄ may be independently any one or more of: F, -CF₃, -CH₂OCH₂CF₃ or -CH₂OCH₂CF₂CF₃, preferably F and/or -CF₃,

Preferably, R₅, R₆, R₇, and R₈ are independently H or -CH₃, -CH₂CH₃, and more preferably wherein R₅, R₆, R₇, and R₈ are H.

The fluorinated moieties and/or oxyalkylene moieties at the terminal ends of the fluorinated oxyalkylene-containing polymer or oligomer may be terminated with a hydrogen or an linear, branched or cyclic C₁-C₁₂ alkyl group such as a methyl group, phenyl or acyl groups such as ethanoyl groups. The fluorinated moieties and oxyalkylene moieties located at the terminal ends of the fluorinated oxyalkylene-containing polymer or oligomer are preferably terminated with a hydrogen or an alkyl group, e.g. linear, branched or cyclic C₁-C₁₂ alkyl group, preferably a C₁-C₆ alkyl group, and more preferably H or -CH₃ (methyl group), phenyl or acyl groups, such as ethanoyl groups. Other optional acyl groups include methanoyl, ethanoyl, propanoyl, benzoyl or propenoyl. Further groups which may terminate the fluorinated moieties and/or oxyalkylene moieties include carboxyl, amine, amide, phosphate, epoxy, vinyl, acrylic, methacrylic, isocyanate, thiol, carboxylic acid, carboxylic acid ester, urethane, ester or oxime functional groups or fluorinated moieties such as -CF₃.

An oxyalkylene moiety terminated by a hydrogen or an alkyl group, may be referred to herein as a hydrogen-terminated oxyalkylene moiety or alkyl-terminated oxyalkylene moiety. A fluorinated moiety terminated by a hydrogen or an alkyl group, may be referred to herein as a hydrogen-terminated fluorinated moiety or alkyl-terminated fluorinated moiety.

As an example, the fluorinated oxyalkylene-containing polymer or oligomer may comprise:
(ai) one or more fluorinated moiety of the formula: 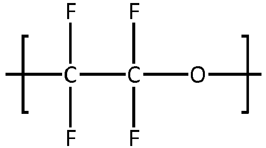 and/or
(aii) one or more fluorinated moiety of the formula: 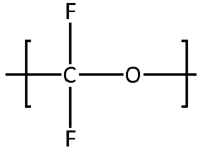 and
(b) an average of from 4.0 to 100.0 oxyalkylene moieties per polymer or oligomer of the formula:

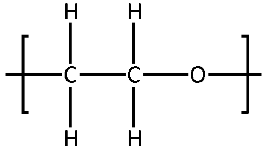

As another example, the fluorinated oxyalkylene-containing polymer or oligomer may comprise:
(ai) one or more fluorinated moiety of the formula: 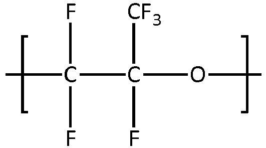 and/or
(aii) one or more fluorinated moiety of the formula: 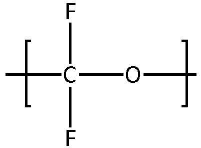 and
(b) an average of from 4.0 to 100.0 oxyalkylene moieties per polymer or oligomer of the formula:

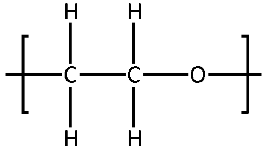

As another example, the fluorinated oxyalkylene-containing polymer or oligomer may comprise:
(ai) one or more fluorinated moiety of the formula: 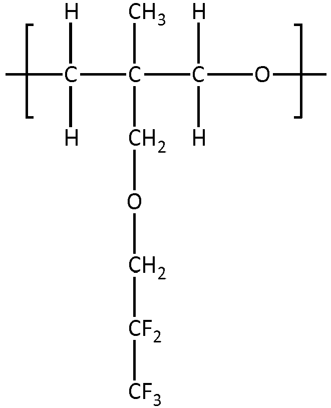 and/or
(aii) one or more fluorinated moiety of the formula: 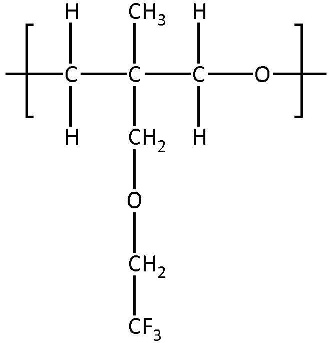 and
(b) an average of from 4.0 to 100.0 oxyalkylene moieties per polymer or oligomer of the formula:

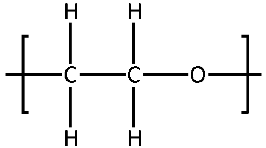

The fluorinated oxyalkylene-containing polymer or oligomer may have an number average molecular weight (Mn) in the range 400 to 40,000. More preferably the average molecular weight (Mn) is in the range 750 to 10,000. The number average molecular weight is determined by Fluorine-19 NMR analysis according to S. Turri et al. Macromolecules, 1995, 28, 7271-7275 and S. Turri et al. Macromol. Chem. Phys. 198 3215-3228 (1997).

The fluorinated oxyalkylene-containing polymer or oligomer can be a fluid or a solid. Preferably the fluorinated oxyalkylene-containing polymer is a fluid with a viscosity between 10 and 1,000,000 mPa.s at 25°C and more preferably between 50 and 100,000 mPa.s at 25°C, measured following ASTM D4287 using a cone and plate viscometer.

The oxyalkylene moieties and fluorinated moieties may be located as part of the polymer/oligomer backbone or as groups pendant from the polymer/oligomer backbone.

In a preferred embodiment, the fluorinated oxyalkylene-containing polymer or oligomer may be defined as an essentially linear copolymer with chains composed of blocks of the one or more fluorinated moiety and blocks of one or more oxyalkylene moieties, the blocks being linked together in an essentially linear fashion e.g. alternating or random. Preferably the oxyalkylene moiety blocks contain independent of each other, an average of from 2.0 to 50.0 oxyalkylene moieties per polymer or oligomer, more preferably an average of from 2.0 to 10.0 oxyalkylene moieties per polymer or oligomer.

For example, the fluorinated oxyalkylene-containing polymer or oligomer is preferably of the form OA-(F-OA)ₙ, wherein OA is a block of one or more oxyalkylene moieties and F is a block of one or more fluorinated moieties. n is an integer, and is preferably 1. The number average molecular weight (Mn) of the polymer/oligomer is preferably in the range of from 400 to 40,000 (determined using Fluorine-19 NMR spectroscopy as mentioned above). The average number of oxyalkylene moieties in the fluorinated oxyalkylene-containing polymer or oligomer is from 4.0 to 100.0. Preferably, n is 1 and the average number of oxyalkylene moieties in each block of oxyalkylene moieties independently ranges from 2.0 to 50.0, more preferably from 2.0 to 10.0. Suitably, the OA moieties are terminated with a hydrogen or an alkyl group, for example a C₁-C₁₂ alkyl group, preferably a C₁-C₆ alkyl group.

As another example, the fluorinated oxyalkylene-containing polymer or oligomer is of the form F-(OA-F)ₙ, wherein OA is a block of one or more oxyalkylene moieties and F is a block of one or more fluorinated moieties. n is an integer such as 1. The number average molecular weight (Mn) of the polymer/oligomer is preferably in the range of from 400 to 40,000 (determined using Fluorine-19 NMR spectroscopy as mentioned above). The average number of oxyalkylene moieties in the fluorinated oxyalkylene-containing polymer or oligomer is from 4.0 to 100.0. Preferably, n is 1 and the average number of oxyalkylene moieties in each block of oxyalkylene moieties independently ranges from 2.0 to 50.0, more preferably from 2.0 to 10.0. Suitably, the F moieties are terminated with a hydrogen or an alkyl group, for example a C₁-C₁₂ alkyl group, preferably a C₁-C₆ alkyl group.

In an alternative embodiment, the fluorinated oxyalkylene-containing polymer or oligomer is a polymer having a backbone of one or more fluorinated moiety having pendant therefrom, blocks of one or more oxyalkylene moieties.

In a further embodiment, the fluorinated oxyalkylene-containing polymer or oligomer is a polymer having a backbone of an average of from 4.0 to 100.0 oxyalkylene moieties having pendant therefrom one or more blocks of one or more fluorinated moieties.

Alternatively, the fluorinated oxyalkylene-containing polymer or oligomer may be a combination of any of the above-noted embodiments. i.e. the fluorinated oxyalkylene-containing polymer or oligomer maybe an essentially linear copolymer with chains composed of blocks of the one or more fluorinated moieties and/or blocks of one or more oxyalkylene moieties, the blocks being linked together in an essentially linear fashion, having pendant therefrom blocks of one or more oxyalkylene moieties and/or one or more fluorinated moieties.

In all embodiments, the average number of oxyalkylene moieties per fluorinated oxyalkylene-containing polymer or oligomer is from 4.0 to 100.0. Preferably, the average number of oxyalkylene moieties in each block of oxyalkylene moieties ranges from 2.0 to 50.0, more preferably from 2.0 to 10.0.

In all embodiments, preferably the number average molecular weight (Mn) of the polymer/oligomer is in the range 400 to 40,000.

The fluorinated moieties and/or oxyalkylene moieties located at the terminal ends of the fluorinated oxyalkylene-containing polymer or oligomer are preferably terminated with a hydrogen or an alkyl group (e.g. a methyl or ethyl group).

The oxyalkylene moieties in the fluorinated oxyalkylene-containing polymer or oligomer are preferably oxyethylene moieties of the structure:

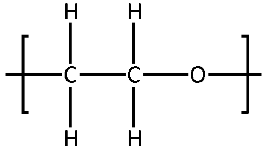

There may be an average of from 4.0 to 100.0 oxyethylene moieties in the fluorinated oxyalkylene-containing polymer or oligomer. Preferably, the average number of oxyethylene moieties in each block of oxyethylene moieties ranges from 2.0 to 50.0, more preferably from 2.0 to 10.0.

In a preferred embodiment, the fluorinated oxyalkylene-containing polymer or oligomer is an essentially linear copolymer with chains composed of blocks of the one or more fluorinated moieties and blocks of one or more oxyethylene moieties, the blocks being linked together in an essentially linear fashion e.g. alternating or random. Preferably the blocks of oxyethylene moieties contain independent of each other an average of from 2.0 to 50.0 oxyethylene moieties, more preferably from 2.0 to 10.0 oxyethylene moieties.
For example, the fluorinated oxyethylene-containing polymer or oligomer is a oxyethylene-terminated copolymer of the form OE-(F-OE)ₙ, wherein OE is a block of one or more oxyethylene moieties and F is a block of one or more fluorinated moieties. n is an integer, and is preferably 1. The number average molecular weight (Mn) of the polymer/oligomer is preferably in the range of from 400 to 40,000. The average number of oxyethylene moieties per fluorinated oxyethylene-containing polymer or oligomer ranges from 4.0 to 100.0, preferably from 4.0 to 20.0. Preferably, n is 1 and the average number of oxyethylene moieties in each block of oxyethylene moieties ranges from 2.0 to 50.0, more preferably from 2.0 to 10.0.
Suitably, the OE moieties are terminated with a hydrogen or an alkyl group (e.g. methyl or ethyl group).

In one embodiment the anti-fouling composition of the invention may comprise one or more, or two or more fluorinated oxyalkylene-containing polymers or oligomers.

In another embodiment the anti-fouling composition of the invention may comprise one or more, or two or more fluid fluorinated alkyl- or alkoxy-containing polymers or oligomers as disclosed in WO 02/074870.

Examples of fluorinated oxyalkylene-containing polymers or oligomer which can be used in the anti-fouling composition of the invention are: Fluorolink^{®} E10-6, Fluorolink^{®} 5144X and Fluorolink^{®} 5147X (Solvay Speciality Polymers) and PolyFox™ PF-651 and Polyfox™ PF-652 (Omnova Solutions Inc). Other examples of suitable fluorinated oxyalkylene-containing polymers or oligomers are disclosed in WO 2004/035656 and EP 1553123.

It is currently understood that the fluorinated oxyalkylene-containing polymer or oligomer is not chemically reactive towards the curable polymers and does not take part in any cross-linking reaction.

### Fillers:

The anti-fouling composition of the invention may also comprise fillers. Examples of fillers that can be used in the coating composition according to the present invention are barium sulphate, calcium sulphate, calcium carbonate, silicas or silicates (such as talc, feldspar, and china clay) including pyrogenic silica, bentonite and other clays, and solid silicone resins, which are generally condensed branched polysiloxanes, such as a silicone resin comprising Q units of the formula SiO_{4/2} and M units of the formula R*^{m}*₃SiO_{1/2}, wherein the R*^{m}* substituents are selected from alkyl groups having 1 to 6 carbon atoms and the ratio of M units to Q units is in the range of 0.4:1 to 1:1. Some fillers such as fumed silica may have a thixotropic effect on the coating composition. The proportion of fillers may be in the range of from 0 to 25wt% by weight, based on the total weight of the coating composition, preferably in the range 0 to 10wt% and more preferably in the range 0 to 5wt%.

### Pigments:

The anti-fouling composition of the invention may also comprise pigments. Examples of pigments include black iron oxide, red iron oxide, yellow, iron oxide, titanium dioxide, zinc oxide, carbon black, graphite, red molybdate, yellow molybdate, zinc sulfide, antimony oxide, sodium aluminium sulfosilicates, quinacridones, phthalocyanine blue, phthalocyanine green, indanthrone blue, cobalt aluminium oxide, carbazoledioxazine, chromium oxide, isoindoline orange, bis-acetoaceto-tolidiole, benzimidazolone, quinaphthalone yellow, isoindoline yellow, tetrachloroisoindolinone, and quinophthalone yellow, metallic flake materials (e.g. aluminium flakes) or other so-called barrier pigments or anticorrosive pigments such as zinc dust or zinc alloys or other so-call lubricant pigments such as graphite, molybdenum disulfide, tungsten disulphide or boron nitride.

Preferred pigments are black iron oxide, red iron oxide, yellow iron oxide, sodium aluminium sulfosilicate and titanium dioxide.

The proportion of pigment may be in the range of from 0 to 25wt% by weight, based on the total weight of the coating composition, preferably in the range 0 to 15wt%.

### Catalysts:

The anti-fouling composition of the invention may also comprise a catalyst. Examples of catalysts that can be used include transition metal compounds, metal salts and organometallic complexes of various metals, such as tin, iron, lead, barium, cobalt, zinc, antimony, cadmium, manganese, chromium, nickel, aluminium, gallium, germanium and zirconium. The salts preferably are salts of long-chain carboxylic acids and/or chelates or organometal salts. Examples of suitable catalysts include for example, dibutyltin dilaurate, dibutyltin dioctoate, dibutyl tin diacetate, dibutyl tin 2-ethylhexanoate, dibutyltin di neodecanoate, dibutyl tin dimethoxide, dibutyltin dibenzoate, dibutyltin acetoacetonate, dibutyltin acetylacetonate, dibutyltin alkylacetoacetonate, dioctyltin dilaurate, dioctyltin dioctoate, dioctyl tin diacetate, dioctyl tin 2-ethylhexanoate, dioctyltin di neodecanoate, dioctyl tin dimethoxide, dioctyltin dibenzoate, dioctyltin acetoacetonate, dioctyltin acetylacetonate, dioctyltin alkylacetoacetonate, dimethyltin dibutyrate, dimethyltin bisneodecanoate, dimethyltin dineodecanoate, tin naphthenate, tin butyrate, tin oleate, tin caprylate, tin octanoate, tin strearate, tin octoate, iron stearate, iron 2-ethylhexanoate, lead octoate, lead 2-ethyloctoate, cobalt-2-ethylhexanoate, cobalt naphthenate, manganese 2-ethylhexanoate, zinc 2-ethylhexanoate, zinc naphthenate, zinc stearate, metal triflates, triethyl tin tartrate, stannous octoate, carbomethoxyphenyl tin trisuberate, isobutyl tin triceroate.

Further examples of suitable catalysts include organobismuth compounds, such as bismuth 2-ethylhexanoate, bismuth octanoate and bismuth neodecanoate.

Further examples of suitable catalysts include organotitanium, organzirconium and organohafnium compounds and titanates and zirconate esters such as, titanium naphthenate, zirconium naphthenate, tetrabutyl titanate, tetrakis(2-ethylhexyl)titanate, triethanolamine titanate, tetra(isopropenyloxy)-titanate, titanium tetrabutanolate, titanium tetrapropanolate, titanium tetraisopropanolate, tetrabutyl zirconate, tetrakis(2-ethylhexyl) zirconate, triethanolamine zirconate, tetra(isopropenyloxy)-zirconate, zirconium tetrabutanolate, zirconium tetrapropanolate, zirconium tetraisopropanolate and chelated titanates such as diisopropyl bis(acetylacetonyl)titanate, diisopropyl bis(ethylacetoacetonyl)titanate and diisopropoxytitanium bis(ethylacetoacetate), and the like.

Further examples of suitable catalysts include amines such as laurylamine, tertiary amines such as triethylamine, tetrametylethylenediamine, pentamethyldiethylenetriamine and 1,4-ethylenepiperazine or quaternary ammonium compounds such as tetramethylammonium hydroxide.

Further examples of suitable catalysts include guanidine based catalysts such as 1 butyl-2,3-dicyclohexyl-1-methyl guanidine.

Further examples of suitable catalysts include organo-phosphates such as bis(2-ethyl-hexyl) hydrogen phosphate, (trimethylsilyl)octylphosphonic acid octylphosphonic acid, bis(Trimethylsilyl)octylphosphate and (2-ethyl-hexyl) hydrogen phosphonic acid.

The catalyst can alternatively be a Lewis acid catalyst for example BF₃, B(CeF₅)₃, FeCl₃, AlCl₃, ZnCl₂, ZnBr₂ or boron, aluminium, gallium, indium or thallium compounds with a monovalent aromatic moiety preferably having at least one electron-withdrawing element or group such as -CF₃, -NO₂ or -CN, or substituted with at least two halogen atoms.

Further, the catalyst may comprise a halogenated organic acid which has at least one halogen substituent on a carbon atom which is in the α-position relative to the acid group and/or at least one halogen substituent on a carbon atom which is in the β-position relative to the acid group, or a derivative which is hydrolysable to form such an acid under the conditions of the condensation reaction. Alternatively, the catalyst may be as described in any of: EP1254192, WO 2001/49774, US 2004/006190, WO 2007/122325A1, WO 2008/132196, WO 2008/055985A1, WO 2009/106717A2, WO 2009/106718A2, WO 2009/106719A1, WO 2009/106720A1, WO 2009/106721A1, WO 2009/106722A1, WO 2009/106723A1, WO 2009/106724A1, WO 2009/103894A1, WO 2009/118307A1, WO 2009/133084A1, WO 2009/133085A1, WO 2009/156608A2, WO 2009/156609A2, WO 2012/130861A1 and WO 2013/013111.

Preferably the catalyst is present in an amount of 0.01 to 5wt% based on the total weight of the coating composition.

### Cross-linker:

The anti-fouling composition of the invention may also comprise a cross-linker. If the curable polymer only contains two reactive functional groups, for example silanol groups, it may be necessary to use an additional reactant as a cross-linker.

The optionally present cross-linker can be an alkoxy silane such as, methyltrimethoxysilane, tetraethoxysilane, vinyltris(methylethyloximo)silane, methyltris(methylethyloximo)silane, vinyltrimethoxysilane, methyltrimethoxysi lane, [(cyclohexylamino)methyl]triethoxysilane, N,N-dibutylaminomethyltriethoxysilane or vinyltriisopropenoxysilane as well as hydrolysis-condensation products of the same. Alternatively the cross-linking agent may be as disclosed in WO99/33927.

A preferred cross-linking agent is an orthosilicate, for example, the cross-linking agent may be tetraethylorthosilicate.

Preferably the cross-linking agent is present in an amount of 0 to 10wt% based on the total weight of the coating composition.

Mixtures of different cross-linkers can also be used.

### Solvent:

The anti-fouling composition of the invention may also comprise a solvent. Suitable solvents include aliphatic, cycloaliphatic and aromatic hydrocarbons, alcohols, ketones, esters, and mixtures of the above. Examples of suitable solvents are white spirit, cyclohexane, toluene, xylene and naphtha solvent, esters such as methoxypropylacetate, n-butyl acetate and 2-ethoxyethylacetate; octamethyltrisiloxane, and mixtures thereof.

In order to minimise the use of solvent on environmental grounds, it is advantageous to use as concentrated a solution as possible which is compatible with the application technique employed. The solvents, if any, typically constitute 5 to 50wt% based on the total weight of the coating composition. The solid content may be determined in accordance with ASTM method D2697.

### Biocides:

One advantage of the anti-fouling coating composition of the present invention is that the coatings have an excellent anti-fouling properties without the use of biocides. In one embodiment of the present invention, the coating composition is free or substantially free of biocide.

Alternatively, to further improve anti-fouling performance, a biocide may be included in the coating composition. In an alternative embodiment therefore, the anti-fouling composition of the present invention may comprise one or more biocide(s).

The biocide may be one or more of an inorganic, organometallic, metal-organic or organic biocide for aquatic organism such as marine or freshwater organisms. Examples of inorganic biocides include copper salts such as copper oxide, copper thiocyanate, copper bronze alloys, copper carbonate, copper chloride, copper nickel alloys, and silver salts such as silver chloride or nitrate; organometallic and metal-organic biocides include zinc pyrithione (the zinc salt of 2-pyridinethiol-1-oxide), copper pyrithione, bis (N-cyclohexyl-diazenium dioxy) copper, zinc ethylene-bis(dithiocarbamate) (i.e. zineb), zinc dimethyl dithiocarbamate (ziram), and manganese ethylene-bis(dithiocarbamate) complexed with zinc salt (i.e. mancozeb); and organic biocides include formaldehyde, dodecylguanidine monohydrochloride, thiabendazole, N-trihalomethyl thiophthalimides, trihalomethyl thiosulphamides, N-aryl maleimides such as N-(2,4,6-trichlorophenyl) maleimide, 3-(3,4-dichlorophenyl)-1,1-dimethylurea (diuron), 2,3,5,6-tetrachloro-4-(methylsulphonyl) pyridine, 2-methylthio-4-butylamino-6-cyclopopylamino-s-triazine, 3-benzo[b]thien-yl-5,6-dihydro-1,4,2-oxathiazine 4-oxide, 4,5-dichloro-2-(n-octyl)-3(2H)-isothiazolone, 2,4,5,6-tetrachloroisophthalonitrile, tolylfluanid, dichlofluanid, diiodomethyl-p-tosylsulphone, capsciacin, N-cyclopropyl-N'-(1,1-dimethylethyl)-6-(methylthio)-1,3,5-triazine-2,4-diamine, 3-iodo-2-propynylbutyl carbamate, medetomidine, 1,4-dithiaanthraquinone-2,3-dicarbonitrile (dithianon), boranes such as pyridine triphenylborane, a 2-trihalogenomethyl-3-halogeno-4-cyano pyrrole derivative substituted in position 5 and optionally in position 1, such as 2-(p-chlorophenyl)-3-cyano-4-bromo-5-trifluoromethyl pyrrole (tralopyril), and a furanone, such as 3-butyl-5-(dibromomethylidene)-2(5H)-furanone, and mixtures thereof, macrocyclic lactones such as avermectins, for example avermectin B1, ivermectin, doramectin, abamectin, amamectin and selamectin, and quaternary ammonium salts such as didecyldimethylammonium chloride and an alkyldimethylbenzylammonium chloride.

In a further embodiments the biocide is either wholly or partially encapsulated, adsorbed or bound from a support.

If the fouling-resistant composition comprises biocide, we mean that the biocide is present within the body of the cured coating layer (in the sense that it was mixed in the coating composition prior to curing).

### Additives:

Optionally the anti-fouling composition of the invention may also comprise other additive substances known to have a non-biocidal anti-fouling effect such as non-reactive organopolysiloxanes; for example polydimethylsiloxane, methylphenyl polysiloxane or hydrophilic modified polysiloxane as disclosed in EP 0885938 and WO 2011/076856; carboxyl-functional organisiloxanes as disclosed in WO 2008/132195; petroleum oils or lanolin and lanolin derivatives and other sterol(s) and/or sterol derivative(s) as disclosed in PCT Application No PCT/EP2012/065920, and combinations thereof.

### Application:

The coating composition can be applied by normal techniques, such as brushing, roller coating, or spraying (airless and air-assisted). To achieve proper adhesion to the substrate it is preferred to apply the anti-fouling coating composition to a primed substrate. The primer can be any conventional primer/sealer coating system. Good results were found, in particular with respect to adhesion, when using a primer that comprises an acrylic siloxy-functional polymer, a solvent, a thixotropic agent, a filler, and, optionally, a moisture scavenger. Such a primer is disclosed in WO 99/33927. It is also possible to apply the coating composition according to the present invention on a substrate containing an aged anti-fouling coating layer. Before the coating composition according to the present invention is applied to such an aged layer, this old layer is cleaned by high-pressure water washing to remove any fouling. The primer disclosed in WO 99/33927 can be used as a tie coat between the aged coating layer and the coating composition according to the present invention.

Optionally the primer may comprise adhesion promoters as disclosed in WO 2010/18164.

Optionally the primer may comprise a biocide as disclosed in WO 2012/175459.

After the coating has been cured it can be immersed immediately and gives immediate anti-fouling and fouling-release protection. As indicated above, the coating composition according to the present invention has very good anti-fouling and fouling-release properties. This makes these coating compositions very suitable for use as anti-fouling or non-fouling coatings for marine applications. The coating can be used for both dynamic and static structures, such as boat hulls, buoys, drilling platforms, dry dock equipment, oil and/or gas production rigs, floating oil and gas processing, storage and offloading vessels, aqua culture equipment, netting and cages, energy generation devices such as offshore wind turbines and tidal and wave energy devices, cooling water intakes for power plants and power stations and pipes which are immersed in water and tanks, pipes and conduits used to store and transport water. The coating can be applied on any substrate that is used for these structures, such as metal, concrete, wood or fibre-reinforced plastic.

### Other:

In another embodiment, the present invention relates to a substrate or a structure coated with the anti-fouling composition as herein described.

A further embodiment of the invention is to a method for inhibiting fouling of a substrate in aquatic environment by applying the anti-fouling composition to the substrate, allowing the anti-fouling composition to cure/harden to form a coating on the substrate, and then locating the coated substrate in the aquatic environment. For the avoidance of doubt, aquatic environment in the context of the present invention is an environment where fouling by marine and freshwater aquatic organisms such as diatoms, slime biofilms, green and brown algae, barnacles, mussels, and the like, takes place.

A further embodiment of the invention is to the use of the anti-fouling composition as described and claimed herein for inhibiting fouling on a substrate in an aqautic environment.

The invention will be elucidated with reference to the following examples.

### Examples:

### Examples 1-7:

Seven different coating compositions were prepared by mixing the components shown in Table 1.

**Table 1**

| | **EXAMPLE** | | | | | | |
|---|---|---|---|---|---|---|---|
| | **1*** | **2*** | **3*** | **4*** | **5** | **6** | **7** |
| | **(g)** | **(g)** | **(g)** | **(g)** | **(g)** | **(g)** | **(g)** |
| Hydroxy terminated organosiloxane polymer (7) | 60.0 | 60.0 | 60.0 | 60.0 | 60.0 | 60.0 | 60.0 |
| Amorphous silica (8) | 1.7 | 1.7 | 1.7 | 1.7 | 1.7 | 1.7 | 1.7 |
| Zeolite moisture scavenger (9) | 0.4 | 0.4 | 0.4 | 0.4 | 0.4 | 0.4 | 0.4 |
| Titanium dioxide (10) | 5.3 | 5.3 | 5.3 | 5.3 | 5.3 | 5.3 | 5.3 |
| Black iron oxide (11) | 1.1 | 1.1 | 1.1 | 1.1 | 1.1 | 1.1 | 1.1 |
| Orthosilicate (12) | 2.7 | 2.7 | 2.7 | 2.7 | 2.7 | 2.7 | 2.7 |
| Xylene (13) | 18.7 | 18.7 | 18.7 | 18.7 | 18.7 | 18.7 | 18.7 |
| Dioctyltin dilaurate (14) | 0.5 | 0.5 | 0.5 | 0.5 | 0.5 | 0.5 | 0.5 |
| 2,4-Pentanedione (15) | 4.3 | 4.3 | 4.3 | 4.3 | 4.3 | 4.3 | 4.3 |
| Fluorinated polymer(1) | | 5.2 | | | | | |
| Fluorinated polymer (2) | | | 5.2 | | | | |
| Fluorinated polymer (3) | | | | 5.2 | | | |
| Fluorinated polymer (4) | | | | | 5.2 | | |
| Fluorinated polymer (5) | | | | | | 5.2 | |
| Fluorinated polymer (6) | | | | | | | 5.2 |

| | | | | | | | |
|---|---|---|---|---|---|---|---|
| *Examples 1-4 are comparative examples. | | | | | | | |

The composition of Example 1 does not contain a fluorinated oxyalkylene-containing polymer or oligomer.

The composition of Example 2 and Example 3 comprises a fluorinated polymer or oligomer, but the fluorinated polymer or oligomer contains no oxyalkylene moieties. These comparative examples are included as representative examples of a fluorinated polymer or oligomer(s) of WO 02/074870.

The composition of Example 4 comprises a fluorinated polymer or oligomer, the fluorinated polymer or oligomer contains an average of 3 oxyethylene moieties per polymer/oligomer.
(1) Fluorolink^{®} D10-H (Solvay Speciality Polymers). (Contains no oxyalkylene moieties; Viscosity at 25°C = 108 mPa.s)
(2) PolyFox™ AT-1035 (Omnova Solutions Inc). (Contains no oxyalkylene moieties; Viscosity at 25°C = 13,674 mPa.s)
(3) Fluorolink^{®} E10-H (Solvay Speciality Polymers). (Contains an average of 3 oxyalkylene moieties per polymer. Oxyethylene moieties are located at the terminal ends of the polymers; Viscosity at 25°C = 144 mPa.s)
(4) Fluorolink^{®} E10-6 (Solvay Speciality Polymers). (Contains an average of 9 oxyethylene moieties per polymer Oxyethylene moieties are located at the terminal ends of the polymers; Viscosity at 25°C = 443 mPa.s)
(5) Fluorolink^{®} 5147X (Solvay Speciality Polymers). (Contains an average of 13 oxyethylene moieties per polymer. Oxyethylene moieties are located at the terminal ends of the polymers; Viscosity at 25°C = 629 mPa.s)
(6) Polyfox™ PF-652 (Omnova Solutions Inc). (Contains an average of 16 oxyalkylene moieties per polymer. Oxyethylene moieties are located at the terminal ends of the polymers; Viscosity at 25°C = 6,214 mPa.s)
(7) Dow Corning^{®} 3-0213 Polymer (Dow Corning) (Viscosity at 25°C = 3,678 mPa.s)
(8) Aerosil^{®} R972 (Evonik)
(9) Molsiv™ 5A-AP (OMYA)
(10) Tioxide^{®} TR92 (Huntsman)
(11) Bayferrox^{®} 318M (Lanxess)
(12) Wacker^{®} TES 40 (Wacker-Chemie)
(13) Xylene (Total)
(14) Tib Kat^{®} 216 (Tib Chemicals)
(15) Camdate™ PLE (Camida)

### Foulina-Resistance Testing (1)- Changi, Singapore

Example coating compositions were applied by brush onto wood substrates primed with a suitable undercoat. The coated substrates were immersed in an aquatic environment where marine fouling is known to occur (Changi, Singapore). The coated substrates were assessed after 44 weeks of immersion, and the extent of fouling coverage recorded as a percentage coverage of fouling. The results of the testing are shown in Table 2.

**Table 2**

| | Total fouling coverage (%) |
|---|---|
| Example 1 | 95 |
| Example 2 | 93 |
| Example 4 | 93 |
| Example 5 | 78 |
| Example 6 | 81 |

After 44 weeks, Example 5 and Example 6 had lower fouling coverage than Example 1, Example 2 and Example 4. Less fouling on Examples 5 and 6, shows an improvement in anti-fouling performance compared to the compositions disclosed WO 02/074870.

### Foulina-Resistance Testing (2)- Changi, Singapore

In a separate test, example coating compositions were applied by brush onto wood substrates primed with a suitable undercoat. The coated substrates were immersed in an aquatic environment where marine fouling is known to occur (Changi, Singapore). The coated substrates were assessed after 35 weeks of immersion, and the extent of fouling coverage recorded as a percentage coverage of fouling. The results of the testing are shown in Table 3.

**Table 3**

| | Total fouling coverage (%) |
|---|---|
| Example 3 | 83 |
| Example 4 | 74 |
| Example 7 | 68 |

After 35 weeks, Example 7 had lower fouling coverage than Example 3 and Example 4. Less fouling on Examples 7 shows an improvement in anti-fouling performance compared to the compositions disclosed WO 02/074870.

### Foulina-Release Testing (1)- Recirculating water chamber

The example coating compositions were applied by brush onto glass substrates primed with a suitable undercoat. The coated substrates were immersed in a recirculating water chamber where the water and environmental conditions are controlled so that marine fouling biofilms are capable of being grown. After a period of 80 days the fouled substrates were placed in a water flow tank. The velocity of water flow in tank was increased from 0 to 1.5 m/s and then to 2.6 m/s. The extent of fouling coverage of the coated substrates was recorded and the % of fouling removed calculated. The results of the testing are shown in Table 4.

**Table 4**

| | % fouling removed at | |
|---|---|---|
| | 1.5 (m/s) | 2.6 (m/s) |
| Example 1 | 0 | 81 |
| Example 2 | 57 | 94 |
| Example 4 | 82 | 98 |
| Example 5 | 92 | 100 |
| Example 6 | 88 | 100 |

As the flow speed increased, some fouling is removed. More fouling is removed from Example 5 and Example 6 than is removed from Examples 1, Example 2 and Example 4. Greater removal for Example 5 and Example 6 shows an improvement in fouling-release properties compared to the coatings disclosed in WO 02/074870.

### Fouling-Release Testing (2)- Recirculating water chamber

In a separate test, example coating compositions were applied by brush onto glass substrates primed with a suitable undercoat. The coated substrates were immersed in a recirculating water chamber where the water and environmental conditions are controlled so that marine fouling biofilms are capable of being grown. After a period of 7 days the fouled substrates were placed in a water flow tank. The velocity of water flow in tank was increased from 0 to 1.5 m/s and then to 2.6 m/s. The extent of fouling coverage of the coated substrates was recorded and the % of fouling removed calculated. The results of the testing are shown in Table 5.

**Table 5**

| | % fouling removed at | |
|---|---|---|
| | 1.5 (m/s) | 2.6 (m/s) |
| Example 3 | 19 | 46 |
| Example 4 | 10 | 38 |
| Example 7 | 35 | 65 |

As the flow speed increased, some fouling is removed. More fouling is removed from Example 7 than is removed from Example 3 and Example 4. Greater removal for Example 7 shows an improvement in fouling-release properties compared to the coatings disclosed in WO 02/074870.

## Claims

1. An anti-fouling composition which comprises a curable polymer and a fluorinated oxyalkylene-containing polymer or oligomer wherein the fluorinated oxyalkylene-containing polymer or oligomer comprises:
(a) one or more fluorinated moiety of the formula: 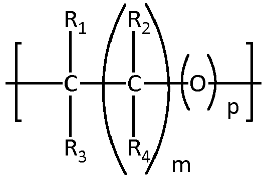 wherein
if there is more than one fluorinated moiety, the fluorinated moiety may be the same or different,
p can be independently 0 or 1,
m can be independently an integer from 0 to 6, and
R₁, R₂, R₃, and R₄ can be independently H; F; Cl; Br; a linear, branched or cyclic alkyl group having 1 to 16 carbon atoms optionally substituted with F; or a linear, branched or cyclic alkyloxyalkane group having 1 to 16 carbon atoms optionally substituted with F;
and:
(b) an average of from 4.0 to 100.0 oxyalkylene moieties per polymer or oligomer, of the formula: 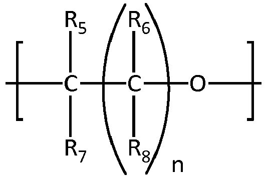 wherein
if there is more than one oxyalkylene moiety, the oxyalkylene moiety may be the same or different,
n can be independently an integer from 0 to 4, and
R₅, R₆, R₇, and R₈ can be independently H or a linear, branched or cyclic C₁-C₁₆ alkyl group.

2. The anti-fouling composition of any preceding claim wherein the oxyalkylene moieties are oxyethylene moieties.

3. The anti-fouling composition of any preceding claim, wherein the fluorinated oxyalkylene-containing polymer or oligomer is of the form OA-(F-OA)ₙ, wherein OA is a block of one or more oxyalkylene moieties and F is a block of one or more fluorinated moieties and n is an integer.

4. The anti-fouling composition of claim 3, wherein n is 1 and the average number of oxyalkylene moieties in each block of oxyalkylene moieties independently ranges from 2.0 to 50.0, more preferably from 2.0 to 10.0.

5. The anti-fouling composition of any proceeding claims, wherein the number average molecular weight (Mn) of the polymer/oligomer is in the range 400 to 40,000.

6. The anti-fouling composition of any preceding claim, wherein the fluorinated moieties and/or oxyalkylene moieties at the terminal ends of the fluorinated oxyalkylene-containing polymer or oligomer are terminated with a hydrogen or an linear, branched or cyclic C₁-C₁₂ alkyl group such as a methyl group, phenyl or acyl groups such as ethanoyl groups.

7. The anti-fouling composition of any preceding claim wherein R₁, R₂, R₃, and R₄ are independently any one or more of: F, -CF₃, -CH₂OCH₂CF₃ or -CH₂OCH₂CF₂CF₃, preferably F and/or -CF₃.

8. The anti-fouling composition of any preceding claim wherein R₅, R₆, R₇, and R₈ are independently, -H, -CH₃ or -CH₂CH₃, preferably wherein R₅, R₆, R₇, and R₈ are -H.

9. The anti-fouling composition of any preceding claim wherein the fluorinated oxyalkylene-containing polymer or oligomer is a fluid, preferably having a viscosity from 10 to 1,000,000 mPa.s at 25°C.

10. The anti-fouling composition of any preceding claim wherein the curable or polymer is one or a mixture of organosiloxane-containing polymer(s) comprising a repeating unit of the formula: 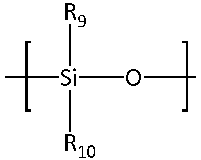 wherein R₉ and R₁₀ are independently selected from hydrogen, alkyl, aryl, aralkyl, or a vinyl group.

11. The anti-fouling composition of any preceding claim, wherein the curable polymer is free of perfluoropolyether moieties.

12. The anti-fouling composition of claim 11 wherein R₉ and R₁₀ are independently selected from methyl and phenyl, preferably when both R₉ and R₁₀ are methyl.

13. The anti-fouling composition of any preceding claim further comprising a biocide.

14. A method for inhibiting fouling of a substrate in aquatic environment by applying the anti-fouling composition of any one of claims 1-13 to the substrate, allowing the anti-fouling composition to cure to form a coating on the substrate, and then locating the coated substrate in the aquatic environment.

15. A substrate coated with an anti-fouling composition as defined in any of Claims 1-13.

## Patentansprüche

1. Bewuchsschutzzusammensetzung, die ein härtbares Polymer und ein fluoriniertes oxyalkylenhaltiges Polymer oder Oligomer umfasst, wobei das fluorinierte oxyalkylenhaltige Polymer oder Oligomer Folgendes umfasst:
(a) einen oder mehrere fluorinierte Reste der Formel: 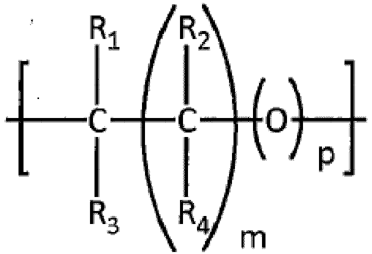 wobei,
wenn mehr als ein fluorinierter Rest vorhanden ist, der fluorinierte Rest gleich oder verschieden sein kann,
p unabhängig aus 0 oder 1 bestehen kann,
m unabhängig eine ganze Zahl von 0 bis 6 sein kann, und
R₁, R₂, R₃ und R₄ unabhängig H; F; Cl; Br; eine lineare, verzweigte oder zyklische Alkylgruppe mit 1 bis 16 Kohlenstoffatomen, wahlweise substituiert mit F; oder eine lineare, verzweigte oder zyklische Alkyloxylalkangruppe mit 1 bis 16 Kohlenstoffatomen, wahlweise substituiert mit F, sein können;
und:
(b) einen Durchschnitt von 4,0 bis 100,0 Oxyalkylen-Reste pro Polymer oder Oligomer der Formel: 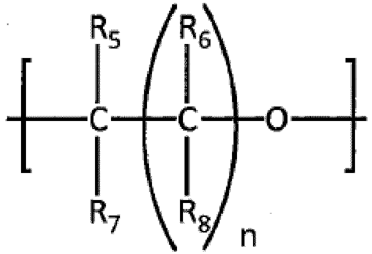 wobei,
wenn mehr als ein Oxyalkylen-Rest vorhanden ist, der Oxyalkylen-Rest gleich oder verschieden sein kann,
n unabhängig eine ganze Zahl von 0 bis 4 sein kann, und
R₅, R₆, R₇ und R₈ unabhängig H oder eine lineare, verzweigte oder zyklische C₁-C₁₆ Alkylgruppe sein können.

2. Bewuchsschutzzusammensetzung nach einem vorhergehenden Anspruch, wobei die Oxyalkylen-Reste aus Oxyethylen-Resten bestehen.

3. Bewuchsschutzzusammensetzung nach einem vorhergehenden Anspruch, wobei das fluorinierte oxyalkylenhaltige Polymer oder Oligomer die Form OA-(F-OA)ₙ aufweist, wobei OA ein Block aus einem oder mehreren Oxyalkylen-Resten ist und F ein Block aus einem oder mehreren fluorinierten Resten ist und n eine ganze Zahl ist.

4. Bewuchsschutzzusammensetzung nach Anspruch 3, wobei n 1 ist und die durchschnittliche Anzahl von Oxyalkylen-Resten in jedem Block von Oxyalkylen-Resten unabhängig im Bereich von 2,0 bis 50,0, weiter bevorzugt von 2,0 bis 10,0 liegt.

5. Bewuchsschutzzusammensetzung nach einem vorhergehenden Anspruch, wobei das durchschnittliche Molekulargewicht (Mn) des Polymers/Oligomers im Bereich von 400 bis 40.000 liegt.

6. Bewuchsschutzzusammensetzung nach einem vorhergehenden Anspruch, wobei die fluorinierten Reste und/oder Oxyalkylen-Reste an den Anschlussenden des fluorinierten oxyalkylenhaltigen Polymers oder Oligomers mit einer Wasserstoff- oder einer linearen, verzweigten oder zyklischen C₁-C₁₂ Alkylgruppe wie z.B. einer Methylgruppe, Phenyl- oder Acylgruppen wie z.B. Ethanoylgruppen abschließen.

7. Bewuchsschutzzusammensetzung nach einem vorhergehenden Anspruch, wobei R₁, R₂, R₃ und R₄ unabhängig aus einem oder mehreren der Folgenden bestehen: F, -CF₃, -CH₂OCH₂CF₃ oder -CH₂OCH₂CF₂CF₃, vorzugsweise F und/oder -CF₃.

8. Bewuchsschutzzusammensetzung nach einem vorhergehenden Anspruch, wobei R₅, R₆, R₇ und R₈ unabhängig aus H, -CH₃ oder -CH₂CH₃ bestehen, vorzugsweise wobei R₅, R₆, R₇ und R₈ aus H bestehen.

9. Bewuchsschutzzusammensetzung nach einem vorhergehenden Anspruch, wobei das fluorinierte oxyalkylenhaltige Polymer oder Oligomer eine Flüssigkeit ist, vorzugsweise mit einer Viskosität von 10 bis 1.000.000 mPa.s bei 25°C.

10. Bewuchsschutzzusammensetzung nach einem vorhergehenden Anspruch, wobei das härtbare Polymer ein oder eine Mischung aus organosiloxanhaltigen Polymer(en) mit einer sich wiederholenden Einheit der Formel: 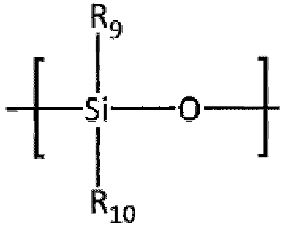 ist,
wobei R₉ und R₁₀ unabhängig aus Wasserstoff, Alkyl, Aryl, Aralkyl oder einer Vinylgruppe ausgewählt sind.

11. Bewuchsschutzzusammensetzung nach einem vorhergehenden Anspruch, wobei das härtbare Polymer frei von Perfluorpolyether-Resten ist.

12. Bewuchsschutzzusammensetzung nach Anspruch 11, wobei R₉ und R₁₀ unabhängig aus Methyl und Phenyl ausgewählt sind, vorzugsweise wenn sowohl R₉ als auch R₁₀ aus Methyl bestehen.

13. Bewuchsschutzzusammensetzung nach einem vorhergehenden Anspruch, weiterhin umfassend ein Biozid.

14. Verfahren zum Verhindern des Bewuchses eines Substrats in Wasserumgebung durch Aufbringen der Bewuchsschutzzusammensetzung nach einem der Ansprüche 1 bis 13 auf das Substrat, wobei ein Aushärten der Bewuchsschutzzusammensetzung ermöglicht wird, um eine Beschichtung auf dem Substrat zu bilden, und danach das beschichtete Substrat in der Wasserumgebung angeordnet wird.

15. Substrat beschichtet mit einer Bewuchsschutzzusammensetzung wie in einem der Ansprüche 1 bis 13 definiert.

## Revendications

1. Composition antisalissure qui comprend un polymère durcissable et un polymère ou oligomère fluoré contenant un oxyalkylène, où le polymère ou oligomère fluoré contenant un oxyalkylène comprend :
(a) un ou plusieurs fragment(s) fluoré(s) de formule : 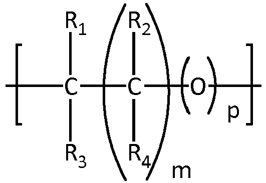 où
s'il y a plus d'un fragment fluoré, le fragment fluoré peut être identique ou différent,
p peut être indépendamment 0 ou 1,
m peut être indépendamment un nombre entier de 0 à 6, et
R₁, R₂, R₃ et R₄ peuvent être indépendamment H ; F ; Cl ; Br ; un groupe alkyle linéaire, ramifié ou cyclique ayant 1 à 16 atomes de carbone facultativement substitué(s) par F ; ou un groupe alkyloxyalkane linéaire, ramifié ou cyclique ayant 1 à 16 atomes de carbone facultativement substitué(s) par F ;
et :
(b) une moyenne de 4,0 à 100,0 fragments oxyalkylène par polymère ou oligomère, de formule : 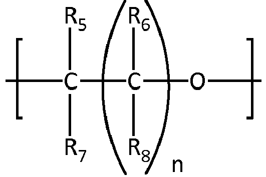 où
s'il y a plus d'un fragment oxyalkylène, le fragment oxyalkylène peut être identique ou différent,
n peut être indépendamment un nombre entier de 0 à 4, et
R₅, R₆, R₇ et R₈ peuvent être indépendamment H ou un groupe alkyle en C₁ à C₁₆ linéaire, ramifié ou cyclique.

2. Composition antisalissure de l'une des revendications précédentes, dans laquelle les fragments oxyalkylène sont des fragments oxyéthylène.

3. Composition antisalissure de l'une des revendications précédentes, dans laquelle le polymère ou oligomère fluoré contenant un oxyalkylène se présente sous la forme OA-(F-OA)ₙ, où OA est un bloc d'un ou de plusieurs fragment(s) oxyalkylène et F est un bloc d'un ou de plusieurs fragment(s) fluoré(s) et n est un nombre entier.

4. Composition antisalissure de la revendication 3, dans laquelle n est égal à 1 et le nombre moyen de fragments oxyalkylène dans chaque bloc de fragments oxyalkylène se trouve indépendamment dans la plage allant de 2,0 à 50,0, plus préférablement allant de 2,0 à 10,0.

5. Composition antisalissure de l'une des revendications précédentes, dans laquelle le poids moléculaire moyen en nombre (Mn) du polymère/oligomère se trouve dans la plage allant de 400 à 40000.

6. Composition antisalissure de l'une des revendications précédentes, dans laquelle les fragments fluorés et/ou les fragments oxyalkylène au niveau des extrémités terminales du polymère ou oligomère fluoré contenant un oxyalkylène se terminent par un hydrogène ou un groupe alkyle en C₁ à C₁₂ linéaire, ramifié ou cyclique tel qu'un groupe méthyle, des groupes phényle ou acyle tels que des groupes éthanoyle.

7. Composition antisalissure de l'une des revendications précédentes, dans laquelle R₁, R₂, R₃ et R₄ sont indépendamment l'un quelconque ou plusieurs parmi : F, -CF₃, -CH₂OCH₂CF₃ ou -CH₂OCH₂CF₂CF₃, de préférence F et/ou -CF₃.

8. Composition antisalissure de l'une des revendications précédentes, dans laquelle R₅, R₆, R₇ et R₈ sont indépendamment, -H, -CH₃ ou -CH₂CH₃, de préférence dans laquelle R₅, R₆, R₇ et R₈ sont -H.

9. Composition antisalissure de l'une des revendications précédentes, dans laquelle le polymère ou oligomère fluoré contenant un oxyalkylène est un fluide, de préférence ayant une viscosité allant de 10 à 1000000 mPa.s à 25°C.

10. Composition antisalissure de l'une des revendications précédentes, dans laquelle le polymère durcissable est un ou un mélange de polymère(s) contenant un organosiloxane comprenant un motif répété de formule : 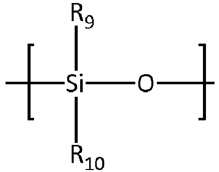 où R₉ et R₁₀ sont indépendamment choisis parmi un hydrogène, un groupe alkyle, aryle, aralkyle ou vinyle.

11. Composition antisalissure de l'une des revendications précédentes, dans laquelle le polymère durcissable est exempt de fragments perfluoropolyéther.

12. Composition antisalissure de la revendication 11, dans laquelle R₉ et R₁₀ sont indépendamment choisis parmi un méthyle et un phényle, de préférence dans laquelle R₉ et R₁₀ représentent tous deux un méthyle.

13. Composition antisalissure de l'une des revendications précédentes comprenant en outre un biocide.

14. Procédé pour empêcher la formation de salissures sur un substrat dans un environnement aquatique en appliquant la composition antisalissure de l'une quelconque des revendications 1 à 13 au substrat, en permettant le durcissement de la composition antisalissure pour former un revêtement sur le substrat, puis en plaçant le substrat revêtu dans l'environnement aquatique.

15. Substrat revêtu d'une composition antisalissure telle que définie dans l'une des revendications 1 à 13.
